(19) Europäisches Patentamt
European Patent Office
Office européen des brevets

(11) **EP 1 134 101 B1**

(12) **EUROPEAN PATENT SPECIFICATION**

(45) Date of publication and mention
of the grant of the patent:
**22.08.2007 Bulletin 2007/34**

(51) Int Cl.:
***B60H 1/00*** *(2006.01)*

(21) Application number: **01103003.8**

(22) Date of filing: **08.02.2001**

(54) **Air conditioning apparatus for vehicle**

Fahrzeugklimaanlage

Appareil de conditionnement pour véhicule

(84) Designated Contracting States:
**DE FR GB IT**

(30) Priority: **28.02.2000 JP 2000051967**

(43) Date of publication of application:
**19.09.2001 Bulletin 2001/38**

(73) Proprietor: **ALPS ELECTRIC CO., LTD.**
**Tokyo (JP)**

(72) Inventor: **Kouno, Masanori,**
**c/o Alps Electric Co., Ltd.**
**Tokyo (JP)**

(74) Representative: **Klunker . Schmitt-Nilson . Hirsch**
**Winzererstrasse 106**
**80797 München (DE)**

(56) References cited:
**US-A- 4 858 677**        **US-A- 5 452 587**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 134 101 B1

**Description**

BACKGROUND OF THE INVENTION

Field of the Invention

The present invention relates to an air conditioning apparatus for a vehicle and particularly to an air blow rate control means for the blower provided within the air conditioning duct of vehicle.

Description of the Related Art

As is known, an air conditioning duct of vehicle is provided with a blower for sucking the external air into the vehicle and circulating the air within the vehicle, an evaporator for cooling and dehumidifying the air transferred with the blower, a heater and an air mixing flap for regulating the blow rate of air to the heater. The air cooled and dehumidified with the evaporator is then heated with the heater and distributed to each air blow-out port within the vehicle.

Document US 5452587, which is considered as the closet prior art, discloses such an air conditioning apparatus for a vehicle.

The air blow-rate of the blower is controlled with a microcomputer via a blower motor control circuit. Namely, the microcomputer calculates the temperature of air blown out from each air blow-out port from the temperature in the vehicle set by a user (preset temperature), air blow rate of the blower, outside temperature and amount of sunlight measured with sensors and vehicle speed or the like. Moreover, when the calculated temperature at the air blow-out port is higher than or equal to the first reference temperature and is lower than or equal to the second reference temperature, for example, when such temperature is within the temperature range higher than or equal to 10°C but lower than or equal to 70°C, the microcomputer outputs, to a blower motor control circuit, an instruction depending on the temperature difference between the preset temperature and vehicle compartment temperature measured with a sensor, depending on the blower control data previously stored in the microcomputer and then applies a blower control input (voltage value) depending on such temperature difference to a blower motor from the blower motor control circuit in view of adjusting the blow rate of the blower to the value depending on the temperature difference.

On the occasion of adjusting a blow rate of the blower depending on the instruction from the microcomputer, if blowing of air from the blower is perfectly stopped when the difference between the preset temperature and vehicle compartment temperature becomes zero or when the difference between the preset temperature and vehicle compartment temperature is set within the predetermined temperature range, disadvantages such as freezing of evaporator and burning of contacts due to the frequency ON/OFF switching operation of the blower may be generated easily.

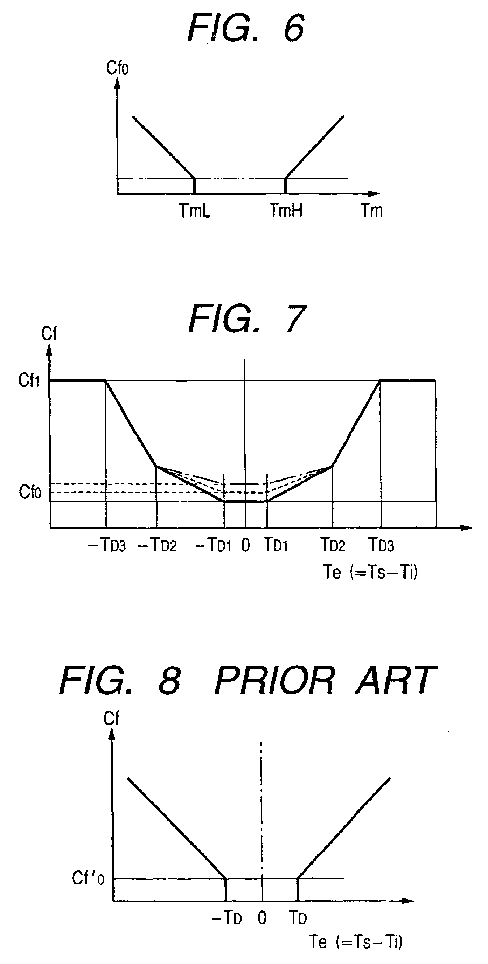

Therefore, in order to eliminate such disadvantages in the related art, there is proposed a technique, as illustrated in Fig. 8, that the predetermined value $Cf_o'$ of the blower control input Cf corresponding to the predetermined blow rate is applied to the blower motor in order to supply the air of the predetermined blow rate to the evaporator even within the predetermined temperature range ($-T_D < T_e < T_D$). In this specification, this predetermined blow rate is called the "offset value of blow rate" and the corresponding blower control input is called the "offset value of blower control input". The blower control input is uniquely calculated from the blow rate with the predetermined conversion formula.

However, the technique in relation to the related art explained above has a problem that since the range of the temperature $T_m$ at the air blow-out port that is controlled in the blow rate of the blower depending on the blower control data previously stored in the microcomputer is previously set to the particular temperature range, for example, to the temperature range higher than or equal to 10°C but lower than or equal to 70°C, if the calculated temperature $T_m$ at the air blow-out port exceeds the previous temperature range, it is impossible to execute the blow rate control of the blower depending on the blower control data and moreover since the offset value of the blow rate is fixed without relation to the temperature $T_m$ of the air blow-out port and therefore the offset value $Cf_o'$ of the blower control input is fixed, if the calculated temperature $T_m$ at the air blow-out port high or low enough for exceeding the temperature range explained above, it is difficult to stably keep the vehicle compartment temperature at the set temperature.

SUMMARY OF THE INVENTION

The present invention has been proposed to overcome the subjects explained above and an object of the present invention is to provide an air conditioning apparatus for a vehicle that can automatically change the offset value of the blower control input depending on the calculated temperature at the air blow-out port in view of quickly raising or falling the vehicle compartment temperature to the set temperature and stably maintaining the vehicle compartment temperature to the set temperature.

In view of solving the subjects explained above, the present invention discloses an air conditioning apparatus for a vehicle, comprising a blower provided within a air conditioning duct in the vehicle, a blower motor for driving the blower, a motor control circuit for controlling a voltage applied to the blower motor and a microcomputer for controlling the air blow rate of the blower via the motor control circuit, wherein the microcomputer calculates temperature of air at the air blow-out port of the air conditioning duct, compares the calculated temperature of air at the air blow-out port with a first and a second reference temperatures previously stored and then calculates, when the temperature of air at the air blow-out port is lower than the first reference temperature or higher than the second reference temperature, an offset value of the air blow rate of the blower depending on the previously stored calculation formula and also calculates an offset value of the blower control input corresponding to the offset value of the air blow rate.

When the corresponding offset value of the blower control input is obtained from the calculated temperature ($T_m$) at the air blow-out port and the blow rate from the blower is raised by controlling the blower motor with the motor control circuit, the vehicle compartment temperature ($T_i$) can be stably maintained at the set temperature ($T_s$), even when the calculated temperature ($T_m$) at the air blow-out port is low or high enough for exceeding the first reference temperature or the second reference temperature and heat radiation from vehicle compartment or heat absorption in the vehicle compartment is extremely high.

In an air conditioning apparatus for a vehicle explained above, the offset value of the air blow rate can be proportionally controlled depending on the difference between the calculated temperature at the air blow-out port and the first reference temperature or second reference temperature.

Thereby, since the necessary offset value of the air blow rate, and moreover the offset value of the blower control input can be obtained only by multiplying the preset offset value of air blow rate with a coefficient determined on the basis of the calculated temperature at the air blow-out port, the air blow rate can be quickly controlled depending on the temperature at the air blow-out port.

Moreover, in the air conditioning apparatus for vehicle explained above, the first reference temperature and the second reference temperature can respectively be set, with the microcomputer, to the temperature lower than or equal to the minimum temperature (for example, 10°C) and to the temperature higher than or equal to the maximum temperature (for example, 70°C) for the control of blower control input.

Thereby, even when the calculated temperature ($T_m$) at the air blow-out port exceeds the predetermined temperature range (for example, not lower than 10°C but not higher than 70°C) for the control of blower control input, the blower control input can be controlled and thereby the apparatus can be operated under the considerably severe environment.

Moreover, in the air conditioning apparatus for vehicle explained above, the blower control input can be proportionally controlled in the multiple stages depending on the difference between the set temperature and the vehicle compartment temperature.

Thereby, when the temperature difference ($T_e$) between the set temperature ($T_s$) and vehicle compartment temperature ($T_i$) is large, the air blow rate of blower can be set large depending on such difference and when such temperature difference ($T_e$) is, on the contrary, small, the air blow rate of blower can be set small depending on such difference. Therefore, the vehicle compartment temperature can be raised or lowered quickly up to the set temperature.

In addition, in the air conditioning apparatus for vehicle, the upper limit value of the blower control input can be proportionally controlled depending on the temperature of engine coolant.

Thereby, even when a user sets the vehicle compartment temperature to a higher value under the condition that the temperature condition in the vehicle is the heat absorbing condition and the temperature of engine coolant is low, the cool air is never intensively blown out to the vehicle compartment and thereby unpleasant feeling of user can be alleviated.

BRIEF DESCRIPTION OF THE DRAWINGS

Fig. 1 is a structural diagram of an air conditioning duct provided within the vehicle.
Fig. 2 is a block diagram of the blower motor control apparatus.
Fig. 3 is a graph illustrating the relationship between a temperature difference between the set temperature and vehicle compartment temperature and the blower control input.
Fig. 4 is a graph illustrating the relationship between the engine coolant temperature and blower control input.
Fig. 5 is a flowchart illustrating the procedures for compensating for the offset value of the blower control input.
Fig. 6 is a graph illustrating the relationship between the air blow-out port temperature and the offset value of the air blow rate.
Fig. 7 is a graph illustrating the compensated blower control mode.
Fig. 8 is a graph illustrating known blower control mode of the related art.

## DETAILED DESCRIPTION OF THE PREFERRED EMBODIMENT

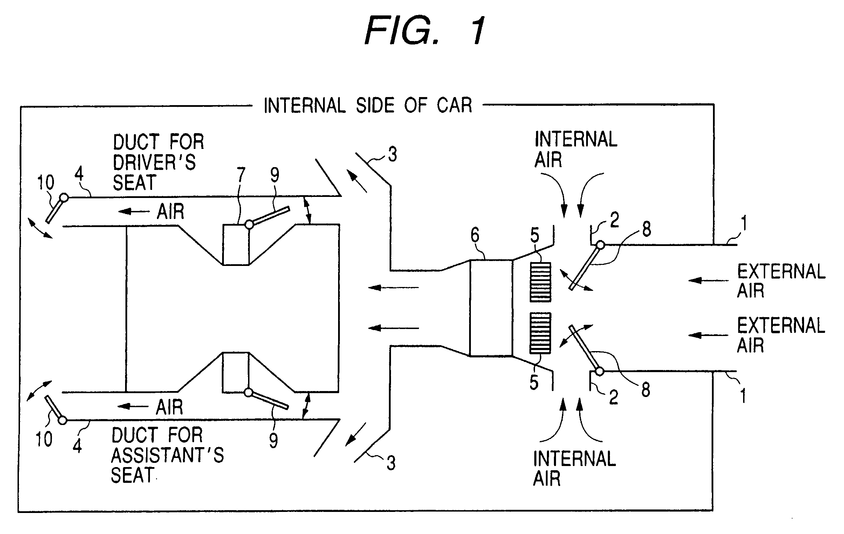

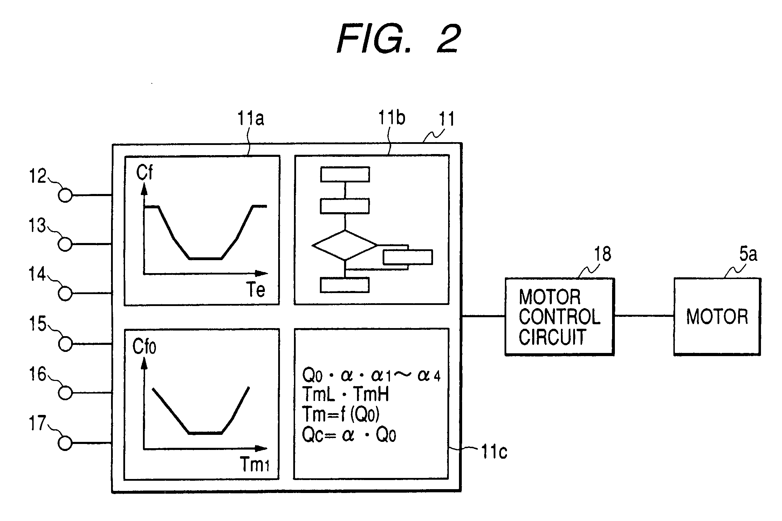

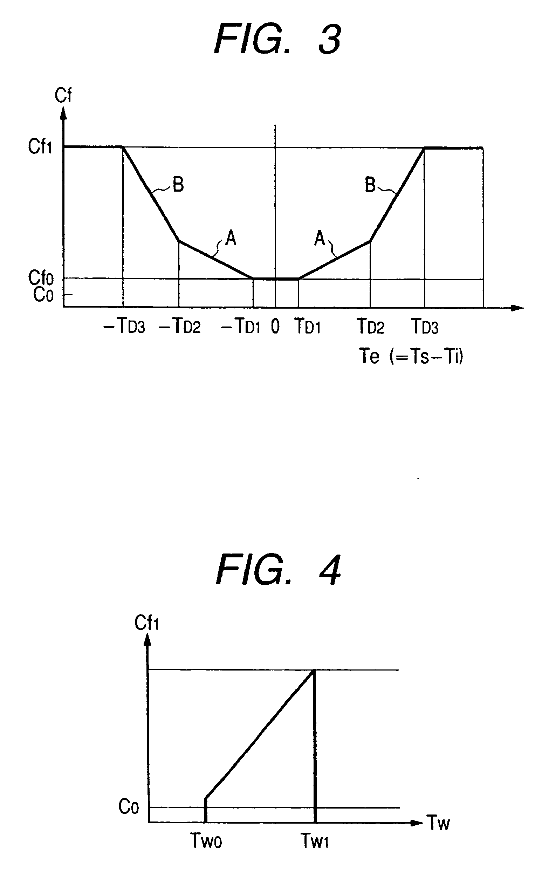

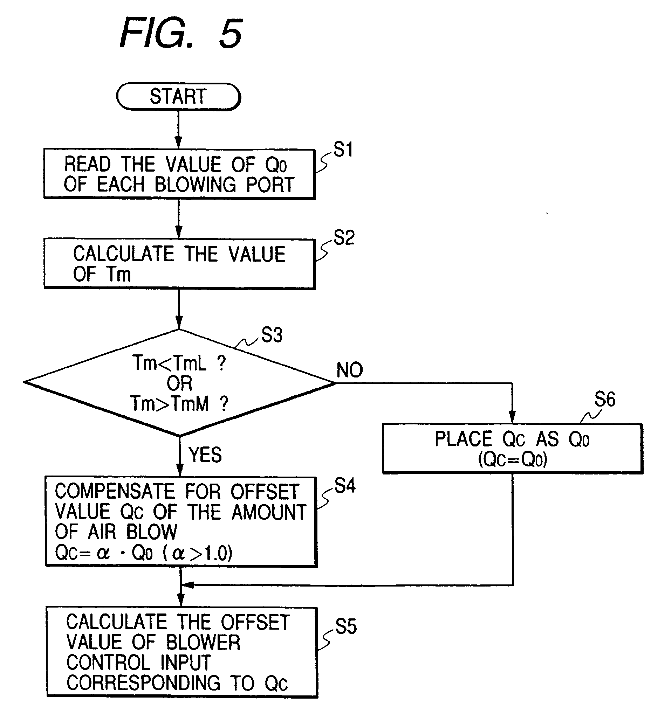

An embodiment of the air conditioning apparatus for vehicle of the present invention will be explained with reference to Fig. 1 to Fig. 7. Fig. 1 is a structural diagram of an air conditioning duct provided within a vehicle. Fig. 2 is a block diagram of a blower motor control apparatus. Fig. 3 is a graph illustrating the relationship of a temperature difference between the set temperature and vehicle compartment temperature and the blower control input. Fig. 4 is a graph illustrating a relationship between the engine coolant temperature and blower control input. Fig. 5 is a flowchart illustrating a procedure for compensating for the offset value of the blower control input. Fig. 6 is a graph illustrating a relationship between the temperature at the air blow-out port and the offset value of the blower control input. Fig. 7 is a graph illustrating the blower control mode after the offset value compensation in comparison with the blower control mode before the offset value compensation.

The air conditioning duct of this embodiment is formed of a driver's seat side duct and an assitant's seat side duct. Each duct of respective seats is provided with an external air intake port 1, an internal air intake port 2, a direct cool air blow-out port 3 and a direct blow-out port 4 of the air mixing the cool and warm airs. Among the external air intake port 1, internal air intake port 2 and direct cool air blow-out port 3, a blower 5 for taking external air or circulating the internal air and an evaporator 6 for cooling and dehumidifying the blowing air from the blower 5 are provided and a heater 7 is also provided between these blower 5, evaporator 6 and the air blow-out port 4 for the air mixing the cool and warm airs. Moreover, the external air intake port 1 is provided with a first flap 8 for switching the intake of the external air and internal air, a flowing path of the air mixing the cool and warm airs is provided with a second flap 9 for adjusting temperature of the air mixing the cool and warm airs and an air blow-out port 4 for the air mixing the cool and warm airs is provided with a third flap 10 for switching the blowing out direction for the air mixing the cool and warm airs to, for example, the front, rear directions and to the defroster or the like. The blower 5 is also provided with a blower motor 5a (refer to Fig. 2) and an output of the blower 5, namely a blow rate of the blower 5 can be adjusted by controlling a voltage value applied to the relevant motor (blower control input).

As illustrated in Fig. 2, the control apparatus of the blower 5 is constituted of inclusion of a microcomputer 11, a vehicle compartment temperature setting means 12, a vehicle compartment temperature measuring means 13, an external air measuring means 14, a sun load measuring means 15, a vehicle speed measuring means 16, an engine coolant temperature measuring means 17 and a motor control circuit 18 for outputting the predetermined blower control input to the blower motor 5a depending on an instruction from the microcomputer 11. The microcomputer 11 is provided with a first to third memories 11a, 11b and 11c.

Here, the data illustrated in Fig. 3, namely the data indicating the correlation of the temperature difference Te between the set temperature $T_s$ and vehicle compartment temperature $T_i$ when the air blow-out port temperature $T_m$ is in the predetermined temperature range (for example, not lower than 8°C but not higher than 72°C) and the blower control input Cf is stored in the first memory 11a, a control flow of the offset value of Fig. 5 is stored in the second memory 11b and the predetermined constants required for calculation and the calculation formula, for example, the calculation formula for calculating the offset value $Q_o$ of the predetermined air blow rate, predetermined coefficients $\alpha$ and $\alpha_1$ to $\alpha_4$, the first reference temperature $T_{mL}$ and second reference temperature $T_{mH}$ as the threshold values for compensating for the offset value of the blower control input and the air blow-out port temperature $T_m$ and the calculation formula for calculating the offset value $Q_c$ of the air blow rate depending on the air blow-out port temperature $T_m$ are stored in the third memory 11c.

Here, the first reference temperature $T_{mL}$ and second reference temperature $T_{mH}$ can be set, with the microcomputer 11, respectively to the temperature lower than or equal to the minimum temperature (for example, 10°C) and the temperature higher than or equal to the maximum temperature (for example, 70°C) enough for the control of the blower control input depending on the mode illustrated in Fig. 3. Thereby, even when the calculated air blow-out port temperature $T_m$ exceeds the predetermined temperature range for the control of blower control input with the microcomputer 11, the blower control input can also be controlled and thereby the apparatus can be operated even under the considerably severe environment.

The calculation formula for calculating the air blow-out port temperature $T_m$ is expressed with the following first formula when the air blow-out port temperature is defined as $T_m$, set temperature set with the vehicle compartment temperature setting means 12 as $T_s$, external temperature measured with the external temperature measuring means 13 as $T_a$, a sun load measured with the sun load measuring means 14 as S, vehicle speed measured with the vehicle speed measuring means 15 as V, an offset blow rate determined with the air blow-out port as $Q_o$ and coefficients as $\alpha_1$ to $\alpha_4$.

[Formula]

$$Tm = \frac{\alpha_1 \cdot (Ts - Ta) - \alpha_2 \cdot S + \alpha_3 \cdot V \cdot (Ts - Ta)}{\alpha_4 \cdot Q_0} + Ts$$

......... (1)

On the other hand, the calculation formula for calculating the offset value $Q_c$ of the air blow rate depending on the air blow-out port temperature $T_m$ is expressed with the following second formula when the offset value of the preset blow rate is defined as $Q_0$, offset value of blow rate after compensation with calculation as $Q_c$ and the coefficient determined based on the air blow-out port temperature $T_m$ as $\alpha$ (where, $\alpha > 1.0$).

[Formula 2]

$$Q_c = \alpha ? Q_0 \quad ......... \quad (2)$$

According to the second formula, since the offset value $Q_c$ of the air blow rate after compensation can be calculated only with multiplying the offset value $Q_0$ of the preset air blow rate with the coefficient $\alpha$ determined on the basis of the air blow-out port temperature $T_m$, the quick control of air blow rate depending on the air blow-out port temperature $T_m$ is now possible.

The data of Fig. 3 indicates the blower control mode by the microcomputer 11 and graduates a temperature difference $T_e$ between the set temperature $T_s$ and the vehicle compartment temperature $T_i$ on the lateral axis, while the blower control input Cf on the vertical axis. As will be apparent from this figure, the blower control input Cf is proportionally controlled in the multiple stages depending on the temperature difference $T_e$. That is, when the temperature difference $T_e$ is in the range of $-T_{D1} \leqq T_e \leqq T_{D1}$, the blower control input $Cf_0$ to obtain the blow rate corresponding to the predetermined offset value $Q_0$ is applied to the blower motor 5a from the motor control circuit 18 and when the temperature difference Te is in the range of $-T_{D2} \leqq T_e < -T_{D1}$ or $T_{D1} < T_e \leqq T_{D2}$, the blower control input Cf applied to the blower motor 5a from the motor control circuit 18 is adjusted with the proportional constant of the lower absolute value expressed with the straight line A, and when the temperature difference $T_e$ is in the range of $-T_{D3} \leqq T_e < -T_{D2}$ or $T_{D2} < T_e \leqq T_{D3}$, the blower control input Cf applied to the blower motor 5a from the motor control circuit 18 is adjusted with the proportional constant of the high absolute value expressed with the straight line B. Moreover, when the blower control input Cf is in the range of $T_e < -T_{D3}$ or $T_{D3} < T_e$, the blower control input $Cf_1$ of constant level is applied to the blower motor 5a from the motor control circuit 18.

As explained above, since the air conditioning apparatus of the present embodiment proportionally controls in the multiple stages the blower control input Cf applied to the blower motor 5a depending on the difference between the set temperature and vehicle compartment temperature, when the temperature difference $T_e$ between the set temperature $T_s$ and vehicle compartment temperature $T_i$ is large, the air blow rate of the blower can be increased depending on such temperature difference and when the temperature difference $T_e$ is small, on the contrary, the air blow rate can be decreased depending on such difference. Accordingly, the vehicle compartment temperature $T_i$ can quickly be raised or lowered up to the set temperature $T_s$.

The blower control input $Cf_1$ applied to the blower motor 5a from the motor control circuit 18 when the temperature difference $T_e$ is in the range of $T_e < -T_{D3}$ or $T_{D3} < T_e$ is set to the value proportional to the engine coolant temperature. Namely, as illustrated in Fig. 4, the blower control input $Cf_1$ is set to the minimum value ($C_0$) for driving the blower motor 5a when the engine coolant temperature Tw is less than the predetermined lower threshold value $Tw_0$. When the engine coolant temperature rises exceeding the lower threshold value $Tw_0$, the value of blower control input $Cf_1$ rises in proportional to the engine coolant temperature and after the engine coolant temperature exceeds the predetermined upper threshold value $Tw_1$, the blower motor 5a is set to the rated value (maximum value). Thereby, even when a user sets the vehicle compartment temperature to a higher value under the condition that the temperature condition within the vehicle is in the heat absorbing condition and the engine coolant temperature is low, the cool air is never blown intensively and unpleasant feeling of user can be alleviated.

Operations of the air conditioning apparatus of this embodiment will be explained depending on the flowchart of Fig. 5.

In the step S1 of Fig. 5, the offset value $Q_o$ of the air blow rate stored in the third memory 11c is read.

Next, in the step S2 of Fig. 5, the air blow-out port temperature $T_m$ of each blow-out port of each duct is calculated on the basis of the first formula stored in the third memory 11c.

In the step S3 of Fig. 5, the threshold values $T_{mL}$ and $T_{mH}$ stored in the third memory 11c are compared with the air blow-out port temperature $T_m$.

In the step S3, when the condition of $T_m < T_{mL}$ or $T_m > T_{mH}$ is determined, the process shifts to the step S4 of Fig. 5 to calculate the offset value $Q_c$ of the air blow rate after the compensation based on the second formula stored in the third memory 11c. Thereafter, shifting to the step S5 of Fig. 5, the blower control input Cf required to obtain the air blow rate corresponding to the offset value $Q_c$ after the compensation is calculated. Thereby, the offset value $Cf_c$ of the blower control input Cf is compensated as illustrated in Fig. 6 depending on the air blow-out port temperature $T_m$ and the air conditioning is conducted within the vehicle in the compensated blower control mode indicated with a broken line of Fig. 7.

In the step S3, when condition of $T_m > T_{mL}$ or $T_m < T_{mH}$ is determined, the process shifts to the step S6 of Fig. 5 and $Q_c$ is placed as $Q_o$ ($Q_c = Q_o$). Thereafter, shifting to the step S5 of Fig. 5, the blower control input $Cf_o$ required to obtain the air blow rate of the predetermined offset value $Q_o$ is calculated. In this case, the air conditioning in the vehicle is conducted in the blower control mode of Fig. 3.

The air conditioning apparatus for vehicle of this embodiment calculates, with a microcomputer 11, the air blow-out port temperature $T_m$ of the air conditioning duct and compensates for the air blow rate by obtaining the offset value of the blower control input Cf to be applied to the blower motor 5a. Therefore, even when the calculated air blow-out port temperature is low or high exceeding the first reference temperature $T_{mL}$ or second reference temperature $T_{mH}$ and heat radiation from the vehicle or heat absorption in the vehicle is excessive, the vehicle compartment temperature can be maintained at the set temperature.

An air conditioning apparatus for a vehicle of the present invention calculates the air blow-out port temperature of the air conditioning duct with a microcomputer and compensates for the air blow rate by obtaining the offset value of the blower control input applied to the blower motor from the calculated air blow-out port temperature and therefore can stably maintain the vehicle compartment temperature to the set temperature even when the calculated air blow-out port temperature is low or high exceeding the first reference temperature and second reference temperature and heat radiation from the vehicle or heat absorption in the vehicle is excessive.

Further, an air conditioning apparatus for a vehicle of the present invention proportionally controls the offset value of the air blow rate depending on the difference between the calculated air blow-out port temperature and the first reference temperature or second reference temperature and therefore can obtain the offset value of the predetermined air blow rate only by multiplying the calculated air blow-out port temperature with the predetermined coefficient to enable the quick control of the air blow rate depending on the air blow-out port temperature.

Still further, an air conditioning apparatus for a vehicle of the present invention respectively sets the first reference temperature and second reference temperature to the temperature lower than or equal to the minimum temperature and the temperature higher than or equal to the maximum temperature for the control of the blower control input with a microcomputer and therefore can control the air blow rate of blower and operate even under the severe environment even when the calculated air blow-out port temperature exceeds the predetermined temperature range when the blower control input is controlled with the microcomputer.

Still further, an air conditioning apparatus for a vehicle of the present invention proportionally controls the air blow rate of blower in the multiple stages depending on the temperature difference between the set temperature and the vehicle compartment temperature and therefore can increase the air blow rate of the blower depending the temperature difference when the temperature difference is large and can reduce the air blow rate of the blower depending on such temperature difference when the temperature difference is small, on the contrary. Thereby the invention can quickly raise or lower the vehicle compartment temperature up to the set temperature.

Still further, an air conditioning apparatus for a vehicle of the present invention proportionally controls the upper limit value of the blower control input depending on the engine coolant temperature. Accordingly, the cool air is never blown out intensively within the vehicle and unpleasant feeling of user can be alleviated even when a user sets the vehicle compartment temperature to a higher value under the condition that the temperature condition within the vehicle is in the heat absorbing condition and the engine coolant temperature is low.

**Claims**

1. An air conditioning apparatus for a vehicle, comprising a blower provided within a air conditioning duct in the vehicle, a blower motor for driving the blower, a motor control circuit for controlling an output voltage to the blower motor and a microcomputer for controlling the air blow rate of the blower via the motor control circuit, wherein the microcomputer calculates temperature of air at the air blow-out port of the air conditioning duct, **characterized in that** said microcomputer compares the calculated temperature of air at the air blow-out port with a first and a second reference temperatures previously stored and then calculates, when the temperature of air at the air blow-out port is lower than the first reference temperature or higher than the second reference temperature, an offset value of the air blow rate of the blower depending on the previously stored calculation formula and also calculates an offset value of the blower control input corresponding to the offset value of the air blow rate.

2. An air conditioning apparatus for a vehicle according to claim 1, wherein the offset value of the air blow rate is proportionally controlled depending on the difference between the calculated temperature at the air blow-out port and the first reference temperature or second reference temperature.

3. An air conditioning apparatus for a vehicle according to claim 1 or 2, wherein the first reference temperature and the second reference temperature are respectively set, with the microcomputer, to the temperature lower than or equal to the minimum temperature and to the temperature higher than or equal to the maximum temperature for the control of blower control input.

4. An air conditioning apparatus for vehicle according to any of claims 1 to 3, wherein the blower control input is proportionally controlled in the multiple stages depending on the difference between the user preset temperature and the temperature within the vehicle.

5. An air conditioning apparatus for a vehicle according to any of claims 1 to 4, wherein the upper limit value of the blower control input is proportionally controlled depending on the temperature of engine coolant.


**Patentansprüche**

1. Klimaanlage für ein Fahrzeug, aufweisend ein Gebläse, das im Inneren eines Klimaanlagenschachts in dem Fahrzeug vorgesehen ist, einen Gebläsemotor zum Antreiben des Gebläses, eine Motorsteuerschaltung zum Steuern einer Ausgangsspannung an den Gebläsemotor und einen Mikrocomputer zum Steuern der Luftströmungsrate des Gebläses über die Motorsteuerschaltung, wobei der Mikrocomputer die Lufttemperatur an der Luftaustrittsöffnung des Klimaanlagenschachts berechnet,
**dadurch gekennzeichnet, dass** der Mikrocomputer die berechnete Lufttemperatur an der Luftaustrittsöffnung mit einer ersten und einer zweiten Referenztemperatur vergleicht, die vorab gespeichert worden sind, und dann, wenn die Lufttemperatur an der Luftaustrittsöffnung niedriger ist als die erste Referenztemperatur oder höher ist als die zweite Referenztemperatur, einen Offset-Wert der Luftströmungsrate des Gebläses in Abhängigkeit von der vorab gespeicherten Berechnungsformel berechnet und ferner auch einen Offset-Wert der Gebläsesteuerungseingabe entsprechend dem Offset-Wert der Luftströmungsrate berechnet.

2. Klimaanlage für ein Fahrzeug nach Anspruch 1,
wobei der Offset-Wert der Luftströmungsrate in Abhängigkeit von der Differenz zwischen der berechneten Temperatur an der Luftaustrittsöffnung und der ersten Referenztemperatur oder der zweiten Referenztemperatur proportional gesteuert wird.

3. Klimaanlage für ein Fahrzeug nach Anspruch 1 oder 2,
wobei die erste Referenztemperatur und die zweite Referenztemperatur mittels des Mikrocomputers auf eine Temperatur, die niedriger als oder gleich der minimalen Temperatur für die Steuerung der Gebläsesteuerungseingabe ist, bzw. auf eine Temperatur, die höher als oder gleich der maximalen Temperatur für die Steuerung der Gebläsesteuerungseingabe ist, gesetzt sind.

4. Klimaanlage für ein Fahrzeug nach einem der Ansprüche 1 bis 3,
wobei die Gebläsesteuerungseingabe in mehreren Stufen in Abhängigkeit von der Differenz zwischen der von einem Benutzer vorgegebenen Temperatur und der Temperatur im Inneren des Fahrzeugs proportional gesteuert wird.

5. Klimaanlage für ein Fahrzeug nach einem der Ansprüche 1 bis 4,
wobei der obere Grenzwert der Gebläsesteuerungseingabe in Abhängigkeit von der Temperatur eines Motorkühlmittels proportional gesteuert wird.

**Revendications**

1. Dispositif de climatisation pour véhicule, comprenant un souffleur placé dans un conduit de climatisation du véhicule, un moteur de souffleur pour entraîner le souffleur, un circuit de commande de moteur pour commander une tension de sortie appliquée au moteur de souffleur et un calculateur pour régler le débit d'air du souffleur via le circuit de commande du moteur, le calculateur calculant la température de l'air à l'orifice de sortie d'air du conduit de climatisation, **caractérisé en ce que** ledit calculateur compare la température calculée de l'air à l'orifice de sortie d'air avec des première et deuxième températures de référence mémorisées au préalable puis calcule, quand la température de l'air à l'orifice de sortie d'air est inférieure à la première température de référence ou supérieure à la deuxième température de référence, une valeur de décalage du débit d'air du souffleur dépendant d'une formule de calcul mémorisée au préalable et calcule aussi une valeur de décalage de l'entrée de commande de souffleur correspondant à la valeur de décalage du débit d'air.

2. Dispositif de climatisation pour véhicule selon la revendication 1, dans lequel la valeur de décalage du débit d'air est commandée de façon proportionnelle en fonction de la différence entre la température calculée à l'orifice de sortie d'air et la première température de référence ou la deuxième température de référence.

3. Dispositif de climatisation pour véhicule selon la revendication 1 ou 2, dans lequel la première température de référence et la deuxième température de référence sont réglées respectivement, avec le calculateur, sur une température inférieure ou égale à la température minimale et sur une température supérieure ou égale à la température maximale pour la commande de l'entrée de commande du souffleur.

4. Dispositif de climatisation pour véhicule selon l'une quelconque des revendications 1 à 3, dans lequel l'entrée, de commande du souffleur est commandée par plusieurs paliers de façon proportionnelle en fonction de la différence entre la température préréglée par l'utilisateur et la température régnant à l'intérieur du véhicule.

5. Dispositif de climatisation pour véhicule selon l'une quelconque des revendications 1 à 4, dans lequel la valeur limite supérieure de l'entrée de commande de souffleur est commandée de façon proportionnelle en fonction de la température du liquide de refroidissement du moteur.

## FIG. 1

INTERNAL SIDE OF CAR

DUCT FOR DRIVER'S SEAT

DUCT FOR ASSISTANT'S SEAT

AIR

AIR

INTERNAL AIR

INTERNAL AIR

EXTERNAL AIR

EXTERNAL AIR

EP 1 134 101 B1

# FIG. 2

# FIG. 3

# FIG. 4

# FIG. 5

```
        ( START )
           │
           ▼
┌─────────────────────┐  S1
│ READ THE VALUE OF Q0 │
│ OF EACH BLOWING PORT │
└─────────────────────┘
           │
           ▼
┌─────────────────────┐  S2
│ CALCULATE THE VALUE │
│ OF Tm               │
└─────────────────────┘
           │
           ▼
       ╱─────────╲  S3
      ╱  Tm<TmL ? ╲      NO      ┌──────────────────┐  S6
     ╱     OR      ╲────────────▶│ PLACE Qc AS Q0   │
      ╲  Tm>TmM ? ╱              │ (Qc=Q0)          │
       ╲─────────╱               └──────────────────┘
           │ YES                          │
           ▼                              │
┌──────────────────────────┐  S4          │
│ COMPENSATE FOR OFFSET     │             │
│ VALUE Qc OF THE AMOUNT    │             │
│ OF AIR BLOW               │             │
│ Qc= α · Q0 ( α >1.0)     │             │
└──────────────────────────┘             │
           │◀─────────────────────────────┘
           ▼
┌──────────────────────────┐  S5
│ CALCULATE THE OFFSET      │
│ VALUE OF BLOWER           │
│ CONTROL INPUT             │
│ CORRESPONDING TO Qc       │
└──────────────────────────┘
```

# FIG. 6

# FIG. 7

# FIG. 8 PRIOR ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5452587 A